# FASCICULE DE BREVET EUROPEEN

(11) **EP 3 898 541 B1**
(45) Date de publication et mention de la délivrance du brevet: **08.05.2024**
(21) Numéro de dépôt: 19817745.3
(22) Date de dépôt: 16.12.2019
(51) Int. Cl.: C03C 17/00

(54) **ARTICLE VITROCERAMIQUE**
GLASKERAMIKARTIKEL
GLASS-CERAMIC ARTICLE

(30) Priorité: 20.12.2018 FR 1873557
(43) Date de publication de la demande: 27.10.2021
(73) Titulaire: Eurokera S.N.C., 02400 Château-Thierry (FR)
(72) Inventeur: VIANDIER, Romain, 77260 LA FERTE SOUS JOUARRE (FR); LUAIS, Erwann, 02400 CHATEAU THIERRY (FR); VILATO, Pablo, 75014 PARIS (FR)
(74) Mandataire: Saint-Gobain Recherche
(86) Numéro de dépôt international: PCT/EP2019/085310
(87) Numéro de publication internationale: WO 2020/127020

(56) Documents cités:
- EP-A1- 0 437 228
- WO-A1-2018/167413
- FR-A1- 2 868 066

## Description

La présente invention concerne le domaine des vitrocéramiques. Plus précisément, elle concerne un article (ou produit) en vitrocéramique, destiné en particulier à couvrir ou recevoir des éléments de chauffage (tel qu'une plaque de cuisson, une porte de four, un insert de cheminée, un pare-feu, etc) et/ou destiné à servir de surface de meuble (le cas échéant, en combinaison avec des éléments de chauffage dans le cas par exemple d'un îlot central pour cuisine ou salle à manger). Par article (en) vitrocéramique, on entend un article à base d'un substrat en matériau vitrocéramique (tel qu'une plaque vitrocéramique), ledit substrat pouvant le cas échéant être muni d'accessoires ou d'éléments supplémentaires (décoratifs ou fonctionnels) requis pour son usage final, l'article pouvant désigner tout aussi bien le substrat seul que celui muni d'équipements supplémentaires (par exemple une plaque de cuisson munie de son bandeau de commande, de ses éléments de chauffage, etc).

Il existe plusieurs produits en vitrocéramique d'usage courant, en particulier les plaques de cuisson en vitrocéramique, rencontrant un grand succès auprès des ménagistes, fabricants d'électroménagers et utilisateurs. Ce succès s'explique notamment par l'aspect attractif de ces plaques et par leur facilité de nettoyage.

Une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisées comme plaque de cuisson dans le domaine de l'électroménager ou comme surface de meuble, une plaque vitrocéramique doit présenter une bonne résistance (telle que définie par exemple selon la norme EN 60335-2-6) à la pression, aux chocs (support et chute d'ustensiles, etc), etc.

Les plaques de cuisson actuelles les plus répandues sont de couleur sombre, en particulier de couleur noire, mais il existe également des plaques d'aspect plus clair (en particulier de couleur blanche, présentant par exemple un flou d'au moins 50% comme décrit dans le brevet FR2766816), voire des plaques transparentes munies de revêtements opacifiants.

Parmi les revêtements (fonctionnels et/ou décoratifs) connus pour les plaques vitrocéramiques, on trouve traditionnellement les émaux, à base de fritte de verre et de pigments, et certaines peintures résistant à haute température, par exemple à base de résines silicones (principalement de type alkydes silicones). Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à des hautes températures (permettant l'usage de différents moyens de chauffage pour la plaque) ; cependant ils peuvent diminuer localement la résistance mécanique des plaques vitrocéramiques et peuvent s'écailler, notamment pour des dépôts d'épaisseur importante ou en plusieurs passes, certaines couleurs soutenues étant en outre difficiles à obtenir (notamment en une seule passe), la cuisson des émaux provoquant souvent l'apparition de teintes non désirées (par exemple brunes ou grises pour les émaux noirs). En particulier, il est difficile d'obtenir une décoration noire ou blanche soutenue, sans teintes parasites, à la surface des vitrocéramiques, en utilisant des émaux traditionnels.

La peinture, quant à elle, peut s'appliquer en plusieurs couches si besoin est et peut présenter diverses couleurs ; cependant, elle doit être appliquée après céramisation, et nécessite donc une cuisson supplémentaire, et elle reste généralement limitée, dans le cas des plaques de cuisson, aux plaques pour foyers à induction (fonctionnant à plus basse température). En outre, comme pour les émaux, il est difficile d'obtenir une décoration noire ou blanche soutenue. En particulier, la couleur « noir profond» est très difficile à atteindre. Dans les formulations à base de résine silicone existantes, les pigments noirs ne sont pas thermiquement stables, ce qui peut provoquer un changement de la couleur et nécessite en particulier de prévoir une forte proportion de pigments, le liant silicone étant en outre absorbé en grande partie par les pigments, ceci créant au final un film de peinture mécaniquement fragile pouvant le cas échéant se fissurer ou se délaminer sous l'effet de contraintes thermomécaniques. Les peintures noires existantes résistant à haute température ne sont ainsi généralement pas suffisamment noires et/ou n'adhèrent pas suffisamment sur le substrat vitrocéramique et/ou ne résistent pas suffisamment à certaines contraintes thermomécaniques recherchées dans les applications visées dans la présente invention. Pour minimiser ces inconvénients ou obtenir une couleur plus soutenue, il est notamment nécessaire de recouvrir les peintures existantes d'une surcouche de peinture (en particulier transparente) et/ou de pate organométallique (en particulier noire) ou d'une couche de résine, ces solutions étant cependant plus coûteuses et n'empêchant pas le cas échéant la formation de craquelures.

Il existe également des revêtements à base de couches réfléchissantes, permettant en particulier d'obtenir, par juxtaposition avec des couches d'émail ou de peinture, des effets recherchés pour des raisons esthétiques et/ou fonctionnelles, cependant ces revêtements sont généralement plus onéreux car ils nécessitent une installation spécifique, leur fabrication, effectuée en reprise après céramisation, est plus complexe ou délicate, et ils sont limités, comme pour les peintures, aux plaques pour foyers à induction (dans le cas des plaques de cuisson).

FR 2 868 066 A1 divulgue des revêtements de coloration noire comprenant en tant que charge du talc.

Le but de la présente invention a été de fournir un nouvel article vitrocéramique (notamment une nouvelle plaque vitrocéramique destinée par exemple à couvrir ou recevoir des éléments de chauffage telles qu'une plaque de cuisson et/ou éventuellement destinée à servir de surface de meuble, en combinaison avec le cas échéant des éléments de chauffage), à base d'un substrat en vitrocéramique, en particulier transparent, présentant en au moins une zone un revêtement de couleur sombre soutenue et persistante malgré les contraintes thermomécaniques imposées le cas échéant audit substrat revêtu, ce revêtement présentant une bonne tenue mécanique, thermique et à l'abrasion et une bonne pérennité, étant économique et simple à obtenir et adhérant suffisamment à la vitrocéramique, tout en fragilisant le moins possible ladite vitrocéramique.

Ce but a été obtenu par l'article (ou produit) selon l'invention, cet article étant en particulier une plaque de cuisson ou un élément mobilier (meuble ou partie de meuble), ledit article comprenant (ou étant formé de) au moins un substrat, tel qu'une plaque, en vitrocéramique, ledit article et/ou ledit substrat étant destiné en particulier à être utilisé avec (notamment à couvrir ou recevoir) au moins une source lumineuse et/ou au moins un élément de chauffage et/ou étant destiné à servir de surface de meuble (en combinaison le cas échéant avec un ou des éléments de chauffage et/ou avec une ou des sources lumineuses), ledit substrat étant revêtu en au moins une zone d'une peinture comprenant (ou formée de) au moins:
- 1) une résine silicone à groupes méthyle(s) et phényle(s),
- 2) une ou des charges minérales lamellaires d'épaisseur inférieure à 2 µm et de dimensions latérales comprises pour au moins 80% en poids desdites charges (ou D80), entre 10 µm et 65 µm (bornes comprises), incluant au moins: 2a) du ou des micas, et 2b) du talc et/ou un ou des carbonates,
- 3) un ou des pigments noirs,
   dans des teneurs en poids, par rapport au poids de la peinture telle que déposée sur le substrat, respectivement
- 1) comprise entre 20 et 50 %,
- 2) de 5 à 20 %, et
- 3) entre 10 et 30 %.

L'article selon l'invention comprend, ou est formé de, au moins un substrat vitrocéramique. De préférence, ce substrat (ou l'article lui-même s'il n'est formé que du substrat) est une plaque, destinée en particulier à couvrir ou recevoir au moins une source lumineuse et/ou un élément de chauffage. Ce substrat (ou respectivement cette plaque) est généralement de forme géométrique, en particulier rectangulaire, voire carrée, voire circulaire ou ovale, etc, et présente généralement une face "supérieure" ou "externe" (face visible ou tournée vers l'utilisateur) en position d'utilisation, une autre face "inférieure" ou "interne" (généralement cachée, par exemple dans un châssis ou caisson de meuble) en position d'utilisation, et une tranche (ou chant ou épaisseur). La face supérieure est généralement plane et lisse mais peut aussi présenter au moins une zone en relief et/ou au moins une zone en creux et/ou au moins une ouverture, etc. La face inférieure est préférentiellement plane et lisse selon la présente invention mais pourrait le cas échéant présenter également des structurations.

L'épaisseur du substrat vitrocéramique est en particulier d'au moins 2 mm, notamment d'au moins 2.5 mm, et est avantageusement inférieure à 15 mm, en particulier est de l'ordre de 3 à 15 mm, notamment de 3 à 6 mm. Le substrat est de préférence une plaque plane ou quasi-plane (en particulier avec une flèche inférieure à 0,1% de la diagonale de la plaque, et de préférence de l'ordre de zéro).

Le substrat peut être à base de toute vitrocéramique, ce substrat présentant avantageusement un CTE nul ou quasi-nul, en particulier inférieur (en valeur absolue) à 30.10⁻⁷ K⁻¹ entre 20 et 300°C, notamment inférieur à 15.10⁻⁷K⁻¹, voire inférieur à 5.10⁻⁷ K⁻¹ entre 20 et 300°C.

On utilise de préférence un substrat transparent ou translucide, notamment à base de toute vitrocéramique ayant, de manière intrinsèque, une transmission lumineuse T_{L} (intégrée dans le domaine des longueurs d'onde du visible) supérieure à 50%, en particulier comprise entre 50 et 90%. Par « de manière intrinsèque», on entend que la plaque possède une telle transmission en elle-même, sans la présence d'un quelconque revêtement. La transmission lumineuse T_{L} est mesurée selon la norme NF EN 410 en utilisant l'illuminant D65, et est la transmission totale (intégrée dans le domaine du visible, entre les longueurs d'onde de 0,38 µm et 0,78 µm), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme NF EN 410.

En particulier, on peut utiliser un substrat en vitrocéramique transparente, comprenant généralement des cristaux de structure β-quartz au sein d'une phase vitreuse résiduelle et présentant un coefficient de dilatation avantageusement inférieur ou égal, en valeur absolue, à 15.10⁻⁷/°C, voire à 5.10⁻⁷/°C, cette vitrocéramique étant par exemple celle des plaques commercialisées sous le nom KeraLite par la société Eurokera. Cette vitrocéramique peut être notamment de composition telle que décrite dans les demandes de brevets publiées sous les numéros suivants : WO 2013171288, US 2010167903, WO 2008065166, EP 2086895, JP 2010510951, EP 2086896, WO 2008065167, US 2010099546, JP 2010510952, EP 0437228, cette vitrocéramique étant en particulier une vitrocéramique d'aluminosilicate de lithium. Le cas échéant, ce substrat/cette vitrocéramique peut également être coloré(e) dans la masse et/ou translucide.

Conformément à l'invention, le substrat est pourvu (ou muni ou revêtu), d'une peinture (ou d'un revêtement en peinture ou d'une ou de couche(s) de peinture) telle que définie selon l'invention (la peinture étant définie par ses composants initiaux, sa composition étant celle telle qu'appliquée sur le substrat, avant le cas échéant séchage et cuisson) sur (ou en) une ou plusieurs zones d'au moins une face (notamment une des faces principales (supérieure ou inférieure)) du substrat, généralement sa face inférieure ou interne, en particulier sur la majeure partie (au moins 50%, de préférence au moins 75%, voire au moins 90%), voire la totalité, de (la surface de) ladite face, à l'exception le cas échéant des afficheurs ou zones d'afficheurs/d'affichage (pour lesquels aucun revêtement ou un revêtement moins opaque le cas échéant que le revêtement de fond (ou revêtement majoritaire) de ladite face est préféré pour cacher l'électronique desdits afficheurs éteints mais laisser passer leur lumière lorsqu'ils sont en marche). Le cas échéant, la peinture selon l'invention peut également être utilisée localement, pour former notamment des motifs décoratifs et/ou fonctionnels (délimitant par exemple des zones de chauffe), le cas échéant en utilisant un second revêtement (aussi formé d'une peinture selon l'invention, par exemple de teinte ou d'opacité différente, ou formé éventuellement d'une autre peinture ou couche de nature différente) pour couvrir d'autres parties du substrat et/ou former un contraste.

Ladite peinture utilise, notamment à titre de liant, au moins une ou des résines silicones (ou polysiloxanes) sélectionnées parmi les résines à groupes méthyle(s) et phényle(s), appelées notamment "résines silicone(s) de type méthyle/phényle", ces résines présentant comme groupes ou substituants organiques (ou étant fonctionnalisée par ou par l'addition - ou l'ajout ou l'incorporation - , ou étant substituée par, ou modifiée par ou par l'addition) des groupes (ou groupements ou fonctions ou radicaux) méthyle(s) et phényle(s). Les résines silicone(s) de type méthyle/phényle utilisées selon l'invention sont en particulier un type de résines dans lesquelles les substituants organiques sont essentiellement ou uniquement constitués de groupes (ou groupes fonctionnels) méthyle(s) et phényle(s), par opposition à d'autres types de résines silicone(s) tels que les résines silicone(s) "de type méthyle" (c'est-à-dire dans lesquelles les substituants organiques sont (seulement) constitués de groupes méthyle(s) (et donc dénuées de groupes phényle(s))), ou les résines silicones modifiées par des résines organiques telles que des résines alkyde(s), époxy ou polyester, désignées notamment par "résines de type (modifiées) époxy" (hybridées/ modifiées/substituées par des groupes époxy), ou "de type (modifiées) alkyde" (hybridées/modifiées/substituées par des groupes alkyde(s)) ou "de type (modifiées) polyester" (hybridées/modifiées/substituées par des groupes polyester(s)), etc. Ces résines sélectionnées selon l'invention sont en particulier dénuées de (ou non fonctionnalisées par) l'un(e) ou plusieurs des fonctions ou groupes suivants: halogène, époxy, polyester, alcényle, vinyle, allyle, alcynyle, mercapto ou thiol ou acrylique. De préférence, la peinture selon l'invention comprend, comme résines silicones, au moins 75% en poids (par rapport au poids total de résines silicones présentes) de résine(s) silicone(s) de type méthyle/phényle, en particulier au moins 80%, et avantageusement 100% de résine(s) silicone(s) de type méthyle/phényle. En particulier la peinture selon l'invention est dénuée de résines silicones de type (modifiées) alkyde et/ou de type (modifiées) époxy et/ou de type (modifiées) polyester, et/ou de type méthyle.

Les résines silicone(s) utilisées peuvent se présenter notamment sous forme de (co-) polymère(s) et/ou oligomère(s), notamment réticulable(s) ou le cas échéant déjà réticulée(s). Ces résines sont avantageusement incolores, présentent avantageusement une température de dégradation supérieure à 350°C, en particulier comprise entre 350°C et 700°C, ainsi qu'une masse moléculaire moyenne (Mw) comprise en particulier entre 2000 et 300 000 g/mol (ou Daltons). La ou les résines silicone(s) préférentiellement utilisées dans la peinture selon l'invention sont en particulier une ou des résines choisies parmi les polyphénylméthylsiloxanes (ou polymère de phénylméthylsiloxane), et/ou les polydiphényldiméthylsiloxanes (ou polymère de diphényl-diméthyl siloxane), etc.

Le taux de résine(s) silicone(s) (consistant de préférence essentiellement ou uniquement en les résines telles que sélectionnées dans la peinture selon l'invention) est compris entre 20 et 50 % en poids, en particulier entre 28 et 40% en poids, de ladite peinture (ces taux étant donnés par rapport à la composition totale telle que déposée sur le substrat et incluant le cas échéant un solvant éliminé ultérieurement par séchage et/ou cuisson) ou encore est compris entre 30 et 80% en poids de l'extrait sec de la peinture.

Comme défini selon l'invention, la peinture comprend également une ou des charges minérales (ou inorganiques), ces charges ne fondant pas notamment lors de la cuisson et étant insolubles, ces charges ayant notamment un rôle de renfort et participant également à la cohésion et la tenue thermique de l'ensemble (mais n'apportant qu'une faible opacité et ayant peu d'effet sur la teinte, contrairement aux pigments), ces charges comprenant au moins une ou des particules de mica(s) et au moins une ou des particules de talc et/ou de carbonate(s) (choisi(s) par exemple parmi le carbonate de calcium et/ou de baryum) de forme (lamellaire) et dimensions (épaisseur inférieure à 2 µm et dimensions latérales comprises entre 10 µm et 65 µm) telles que sélectionnées selon l'invention, les particules de mica(s) contribuant plus au renforcement mécanique et impactant moins la colorimétrie que les particules de talc et/ou de carbonate(s) dans la peinture selon l'invention et la présence des deux étant avantageuse selon la présente invention. De préférence, la peinture selon l'invention comprend, comme charges, au moins 90% en poids (par rapport au poids total de charges présentes) dudit mélange de particules de mica(s) et de particules de talc et/ou de carbonate(s) de forme et de dimensions telles que sélectionnées selon l'invention, et avantageusement 100% en poids dudit mélange (en d'autres termes les charges présentes sont seulement constituées dudit ou consistent uniquement en ledit mélange).

Ces charges telles que sélectionnées selon l'invention sont des charges de forme lamellaire, c'est-à-dire sous forme de plaquettes de faible épaisseur comparativement à leurs dimensions "latérales" (dans le plan respectif des plaquettes), l'épaisseur de ces plaquettes (ou dimension la plus petite) étant selon l'invention inférieure 2 µm (pour toutes les particules notamment) et leurs dimensions "latérales" étant selon l'invention, pour au moins 80% en poids desdites particules (D80), comprises entre 10 µm et 65 µm (des dimensions inférieures n'empêchant pas notamment l'apparition de craquelures dans la composition de peinture sélectionnée selon l'invention), en particulier comprises entre 10 et 60 µm (bornes incluses), lesdites plaquettes pouvant le cas échéant être localement agrégées en formant des agrégats ou agglomérats. Par dimensions "latérales", on entend pour chaque plaquette les dimensions dans le plan de ladite plaquette (en particulier la longueur (plus grande dimension) et la largeur (plus grande dimension perpendiculairement à la longueur), cette largeur étant généralement inférieure à la longueur (donnant une forme de plaquette plus ou moins allongée ou rectangulaire) mais pouvant éventuellement être proche de la longueur (donnant une forme de plaquette irrégulière s'inscrivant plus ou moins dans un cercle)). Pour l'évaluation de ces dimensions latérales, on considère ici le paramètre de taille D80 correspondant à la taille d'au moins 80% en poids desdites particules, ce paramètre étant évalué par analyse granulométrique par granulométrie ou diffraction laser selon notamment la norme ISO 13320 :2009. La forme des charges peut notamment être observée par microscope optique avant incorporation dans la peinture ou par microscope électronique à balayage (MEB) une fois dans la peinture, ces charges étant en particulier obtenues par broyage jusqu'à obtenir les dimensions sélectionnées.

Le taux des charges telles que sélectionnées dans la peinture selon l'invention est de 5 à 20% en poids, et préférentiellement de 8 à 20% en poids, ou encore de 1 à 10%, (en particulier de 2 à 10%) en volume, par rapport à ladite peinture (composition totale telle que déposée sur le substrat et incluant le cas échéant un solvant éliminé ultérieurement par séchage et/ou cuisson). De préférence le taux de talc/carbonate(s) est compris entre 5 et 15% en poids, et le taux de mica(s) est compris entre 3 et 12% en poids.

Comme indiqué précédemment, la peinture utilisée selon l'invention est également formée de pigment(s) noir(s), le taux de pigment(s) (consistant de préférence en pigment(s) noir(s)) étant compris entre 10% et 30% (bornes incluses) en poids de la peinture, et étant de préférence de 15 ou 20 à 30% en poids de la peinture.

Les pigments utilisés pour réaliser la peinture sont de préférence (uniquement) des pigments inorganiques, et sont de préférence uniquement des piments noirs. Ils sont préférentiellement choisis parmi les pigments noirs à base d'oxydes métalliques, en particulier à base d'oxyde(s) de chrome, d'oxyde(s) de cuivre, d'oxyde(s) de fer et/ou d'oxyde(s) de manganèse. Des exemples de pigments précités sont par exemple commercialisés, entre autres, par la société Kremer sous la référence PBk 26.77494 ou par la société Tomatec sous la référence 42-303B ou par la société Asahi Sangyo sous la référence 3250LM ou par la société Sheperd sous la référence Black 430.

Les pigments sont notamment dispersés dans la ou les résines silicone(s) précitée(s) (faisant office de liant, les termes "liant silicone" pouvant également être utilisé pour désigner les résines silicone(s)) et/ou dans un médium ajouté (comme précisé ultérieurement). Les pigments se présentent généralement sous forme de poudre avant d'être mis en suspension ou dispersion dans un liant ou médium. Les pigments sont préférentiellement choisis dans la présente invention de façon à ce qu'au moins 50% (en nombre), et de préférence au moins 75%, voire au moins 80%, des particules de (ou formant ces) pigments présentent une taille inférieure à 1 µm, quelle que soit la forme de ces particules.

On appelle taille d'une particule son diamètre équivalent, c'est-à-dire le diamètre de la sphère qui se comporterait de manière identique lors de l'analyse granulométrique des particules (ou de la poudre formée desdites particules) formant les pigments considérés, la distribution granulométrique (ensemble des tailles de particules) étant mesurée en particulier par granulométrie laser.

La ou les résines silicone(s) précitées enrobent notamment la poudre pigmentaire dans la peinture et permettent l'agglomération en masse des particules après séchage pour former la couche de peinture solide. Le cas échéant, la peinture, notamment sous sa forme prête au dépôt, contient également, outre la ou les résines silicone(s) liant les pigments, au moins un (autre) médium ou solvant, faisant partie de (ou ajoutée avec) la ou les résine(s) silicone(s) telle(s) qu'ajoutée(s) dans la composition de peinture et/ou faisant partie de (ou ajoutée dans) la peinture, ce solvant permettant la mise à viscosité désirée pour l'application sur le substrat et permettant la liaison préalable de la peinture avec le substrat. Comme solvant on peut utiliser par exemple du white spirit (ou naphta lourd), du toluène, un solvant de type hydrocarbure aromatique ( comme le solvant commercialisé sous la marque Solvesso 100 par la société Exxon), etc. Le taux de solvant dans la peinture lors du dépôt est généralement de l'ordre de 25 à 45% en poids de la peinture, le solvant étant ensuite éliminé pour obtenir la couche finale (cette élimination se faisant notamment lors du séchage et/ou de la cuisson). De préférence, la peinture utilisée selon l'invention est dénuée d'eau ou de solvant aqueux pour une meilleure mise en oeuvre notamment.

La peinture peut également inclure éventuellement d'autres types de composants, tels qu'un ou des additifs choisis notamment parmi les agents dispersants (comme ceux commercialisés sous la référence Dysperbyk 102 ou Tego dispers689 par les sociétés Byk ou Evonik), débullants (comme ceux commercialisés sous la référence Byk A506 ou Byk A530 par les sociétés Byk ou Evonik), mouillants, stabilisants, tensioactifs, ajusteurs de pH ou de viscosité, biocides, antimousse, anti-oxydants, siccatifs, etc, à un taux total d'additifs (en supplément des liant(s) silicone(s), pigments, charges et solvant(s) précités) n'excédant pas 10%, et en particulier compris entre 1 et 10% en poids.

Contrairement à une composition d'émail, la composition de peinture selon l'invention est dénuée de fritte de verre ou de composants aptes à former ensemble une matrice vitreuse. La composition de peinture selon l'invention se présente au dépôt sous forme d'une dispersion et est également avantageusement dénuée de gel de silice ou de silice colloïdale pour une meilleure mise en oeuvre de la composition (contrairement à un hydrolysat ou un sol-gel, elle est notamment plus simple à former et à utiliser).

Dans un mode de réalisation préféré selon l'invention, la peinture selon l'invention présente la composition suivante (ou comprend les constituants suivants dans les limites définies ci-après, bornes comprises), les proportions étant exprimées en pourcentages pondéraux (pourcentages en poids, ou pourcentages massiques, par rapport au poids total de la composition de peinture prête au dépôt) :
- résine(s) silicone(s) de type méthyle/phényle: 20- 50%, de préférence 28-40%,
- pigment(s) noir(s) : 10-30%, de préférence 18-25%,
- charge(s) lamellaire(s) à base de mica(s) et de talc et/ou carbonate(s) : 5 - 20%, de préférence 10 - 20%, voire 15 - 20%,
- agent(s) dispersant(s) et agent(s) débullant(s) : 1-10%, de préférence 2-5%,
- solvant(s): 25 - 45 %, de préférence 28-45%.

Le revêtement en peinture une fois solide est formé principalement de la ou des résines silicones, des charges et des pigments précités. La peinture avant dépôt se présente généralement sous forme d'un mélange liquide-solide stable et de consistance pâteuse, la viscosité au dépôt de la peinture étant préférentiellement comprise entre 1000 et 3000 mPa.s, en particulier entre 1300 et 1800 mPa.s.

La peinture peut être formée directement par mélange de ses constituants dans les proportions requises, la viscosité étant ajustée le cas échéant par l'ajout du solvant.

L'épaisseur du revêtement final en peinture (une fois sec) est préférentiellement comprise entre 20 et 40 µm, notamment entre 25 et 35 µm.

La solution selon la présente invention permet d'obtenir de façon simple et économique, sans opération complexe (la couche de peinture étant notamment déposée avantageusement et simplement par sérigraphie), de façon durable et avec une grande flexibilité, les produits recherchés selon l'invention. Le revêtement obtenu (après séchage/cuisson) est en particulier noir profond, et se caractérise notamment par une luminance L* inhabituellement basse, inférieure à 5 (la luminance des peintures existantes pour les applications visées étant généralement d'au moins 12), la luminance L* étant une composante définie dans le système colorimétrique CIE et étant évaluée de façon connue, à l'aide notamment d'un colorimètre Byk-Gardner Color Guide 45/0 (colorimétrie en réflexion) sur la face supérieure du substrat (le substrat utilisé pour la mesure de luminance de la peinture étant un substrat vitrocéramique transparent de 4 mm d'épaisseur ayant, de manière intrinsèque, une transmission lumineuse T_{L} (intégrée dans le domaine des longueurs d'onde du visible) de 85-90%, et posé sur un fond blanc opaque) en utilisant l'illuminant D65 (l'échantillon étant éclairé sous un angle de 45° et observé sous un angle de 0°). De plus la peinture présente une bonne résistance aux contraintes thermomécaniques habituelles des vitrocéramiques, aucune décoloration ni délamination n'étant observée notamment en cas de variations de températures jusqu'à 500°C. La composition de peinture peut être utilisée dans toute zone du substrat vitrocéramique, même lorsque ces zones sont soumises à des températures élevées et/ou à un éclairage fort. On observe également une bonne adhésion de la peinture au substrat, cette peinture présentant en outre une bonne résistance à la rayure en particulier une résistance au crayon 2B selon la norme ISO 15164 et une résistance d'au moins 1N selon la norme ISO 1518-1.

Le cas échéant, le substrat peut comprendre un ou des revêtements supplémentaires, en particulier localisés (par exemple un émail en face supérieure pour former des motifs simples ou des logos). Avantageusement, la peinture telle que sélectionnée revêt le substrat selon l'invention sans nécessité d'une surcouche ou sous couche.

L'article selon l'invention peut comprendre également au moins une ou plusieurs sources lumineuses et/ou un ou plusieurs éléments de chauffage (ou éléments chauffants, tels qu'un ou plusieurs moyens de chauffage par induction), placé(s) en face inférieure du substrat. La ou les sources peuvent être intégrées dans/couplées à une ou des structure(s) de type afficheur(s) (par exemple à diodes électroluminescentes dits « à 7 segments »), à un bandeau de commande électronique à touches sensitives et affichage digital, à un écran LCD, etc. Les sources lumineuses sont avantageusement formées par des diodes électroluminescentes, plus ou moins espacées.

L'article selon l'invention peut comporter le cas échéant d'autres éléments, par exemple, dans le cas d'un module ou d'une plaque de cuisson, l'article peut être muni de (ou associée avec des) élément(s) fonctionnel(s) ou de décor supplémentaire(s) (cadre, connecteur(s), câble(s), élément(s) de commande), etc.

La présente invention concerne également le procédé de fabrication des articles selon l'invention, dans lequel le substrat vitrocéramique est revêtu en regard d'au moins une zone d'une peinture telle que précédemment sélectionnée.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

La peinture sélectionnée selon l'invention est préférentiellement appliquée (en une ou plusieurs couches, de préférence une couche), de façon rapide et simple, par sérigraphie (sous forme notamment d'aplat(s) avec le cas échéant des épargnes en zone d'affichage) sur le substrat en vitrocéramique (ce dépôt étant effectué après la céramisation éventuelle du substrat), avantageusement sur la face inférieure dudit substrat, dans les zones appropriées (en regard de la ou des zones lumineuses par exemple).

De préférence, la toile (ou l'écran) de sérigraphie utilisée, composée par exemple de tissus de fils en polyester ou polyamide, est choisie de façon à présenter un nombre de fils par cm compris entre 32 et 43 fils par cm, permettant ainsi d'obtenir une épaisseur et une définition du revêtement en peinture particulièrement appropriée.

La peinture une fois déposée est séchée (par exemple quelques minutes à 160°C) et cuite (en reprise) sur le substrat céramisé, à des températures entre 350 et 480°C pendant de 40 à 60 min environ, le revêtement en peinture final obtenu formant une couche à base de polymères.

Le cas échéant, le procédé comprend également une opération de découpe (généralement avant céramisation), par exemple par jet d'eau, traçage mécanique à la molette, etc. suivie par une opération de façonnage (meulage, biseautage,...).

La présente invention et ses avantages seront mieux compris à la lecture des exemples comparatifs qui suivent, uniquement donné à titre illustratif et non limitatif, le substrat vitrocéramique utilisé étant un substrat transparent tel que défini dans le document EP0437228.

### Exemple 1 selon l'invention:

La peinture utilisée est préparée en mélangeant :
- 30% en poids de résine silicone de type méthyle/phényle commercialisée sous la référence RSN-0249 par la société Dow Corning,
- 20% en poids de pigments noirs à base d'oxydes de fer et manganèse, dont la distribution de taille est inférieure à 0,5 µm, ces pigments étant commercialisés sous la référence PBk 26.77494 par la société Kremer,
- 10% en poids de charges sous forme de (particules de) micas lamellaires d'épaisseur inférieure à 2 µm, ces charges/mica(s) présentant un D80 de 15 µm et étant commercialisées sous la référence Ronaflair Mica M par la société Merck,
- 8% en poids de (charges sous forme de) talc commercialisé par la société Imerys, ces particules de talc étant de forme lamellaire et d'épaisseur inférieure à 2 µm et présentant un D80 de 30 µm,
- 1% en poids de dispersant de référence Dysperbik 103 de la société Byk,
- 1% en poids d'agent débulleur de référence Byketol OK de la société Byk,
- 30% en poids de solvant de type naphta commercialisé sous la référence Solvesso 100 par la société Exxon.

La peinture est ensuite appliquée par sérigraphie avec une toile de référence 32 (32 fils par cm) sur le substrat, puis séchée 4 minutes à 160°C. Elle est ensuite cuite à l'aide d'un traitement thermique de 45 minutes de 350°C à 450°C.

### Exemple 2 selon l'invention :

La peinture utilisée est préparée en mélangeant :
- 30% en poids de résine silicone de type méthyle/phényle commercialisée sous la référence KR-282 par la société Shinetsu,
- 20% en poids de pigments noirs à base d'oxyde de cuivre, chrome et manganèse dont la distribution de taille est de 0,6 µm, ces pigments étant commercialisés sous la référence 42-303B par la société Tomatec,
- 10% en poids de charges sous forme de particules de micas lamellaires d'épaisseur inférieure à 2 µm et présentant un D80 de 60 µm, commercialisées sous la référence loriodin 600 par la société Merck,
- 8% en poids de (charges sous forme de) talc commercialisé par la société Imerys, ces particules de talc étant de forme lamellaire et d'épaisseur inférieure à 2 µm et présentant un D80 de 30 µm,
- 1% en poids de dispersant de référence Dysperbik 103 de la société Byk,
- 1% en poids d'agent débulleur de référence Byketol OK de la société Byk,
- 30% en poids de solvant de type naphta commercialisé sous la référence Solvesso 100 par la société Exxon.

La peinture est ensuite appliquée par sérigraphie avec une toile de référence 32 sur le substrat, puis séchée 4 minutes à 160°C. Elle est ensuite cuite à l'aide d'un traitement thermique de 45 minutes de 350°C à 450°C.

### Exemple de référence 1 non conforme à l'invention :

La peinture utilisée est préparée en mélangeant :
- 35% en poids de résine silicone de type méthyle/phényle commercialisée sous la référence RSN-0249 par la société Dow Corning,
- 25% en poids de pigments noirs à base d'oxyde de cuivre, chrome et manganèse dont la distribution de taille est de 0,6 µm, ces pigments étant commercialisés sous la référence 42-303B par la société Tomatec,
- 8% en poids de (charges sous forme de) talc commercialisé par la société Imerys, ces particules de talc étant de forme lamellaire et d'épaisseur inférieure à 2 µm et présentant un D80 de 8 µm,
- 1% en poids de dispersant de référence Dysperbik 103 de la société Byk,
- 1% en poids d'agent débulleur de référence Byketol OK de la société Byk,
- 30% en poids de solvant de type naphta commercialisé sous la référence Solvesso 100 par la société Exxon.

La peinture est ensuite appliquée par sérigraphie avec une toile de référence 32 sur le substrat, puis séchée 4 minutes à 160°C. Elle est ensuite cuite à l'aide d'un traitement thermique de 45 minutes de 350°C à 450°C.

### Exemple de référence 2 non conforme à l'invention :

La peinture utilisée est préparée en mélangeant:
- 35% en poids de résine silicone de type méthyle commercialisée sous la référence KR-220L par la société Shinetsu
- 20% en poids de pigments noirs de référence PBk 26.77494 commercialisés par la société Kremer, à base d'oxyde de fer et manganèse et dont la distribution de taille est inférieure à 0,5 µm,
- 13% en poids de (charges sous forme de) talc commercialisé par la société Imerys, ces particules de talc étant de forme lamellaire et d'épaisseur inférieure à 2 µm et présentant un D80 de 8 µm,
- 1% en poids de dispersant de référence Dysperbik 103 de la société Byk,
- 1% en poids d'agent débulleur de référence Byketol OK de la société Byk,
- 30% en poids de solvant de type naphta commercialisé sous la référence Solvesso 100 par la société Exxon;

La peinture est ensuite appliquée par sérigraphie avec une toile de référence 32 sur le substrat, puis séchée 4 minutes à 160°C. Elle est ensuite cuite à l'aide d'un traitement thermique de 45 minutes de 350°C à 450°C.

Un échantillon de chaque vitrocéramique muni de chaque peinture est ensuite posé sur un élément chauffant. La température mesurée au niveau du revêtement est de 260°C (correspondant à la température vue par le revêtement lors d'une cuisson de nourriture de type saucisses). Plusieurs cycles de chauffe de 15 minutes à 260°C suivi d'un refroidissement jusqu'à température ambiante sont ensuite effectués (durée totale de chaque cycle de 20 minutes).

On observe que la peinture dans les exemples selon l'invention résiste à au moins 1500 cycles de chauffe sans se fissurer ni présenter de craquelures ni se délaminer, alors que dans les exemples comparatifs de référence, la peinture se fissure/présente des craquelures et se délamine au bout de 100 cycles. De plus la peinture des exemples selon l'invention est particulièrement noire (avec un L*<5) et adhère bien au substrat vitrocéramique, les essais de rayure suivant les normes ISO15184 et ISO1518-1 donnant respectivement une résistance à un crayon 2B et une résistance à une force d'au moins 1N.

Les articles, en particulier plaques, selon l'invention peuvent notamment être utilisées avec avantage pour réaliser une nouvelle gamme de plaques de cuisson pour cuisinières ou tables de cuisson ou une nouvelle gamme de tables de travail, consoles, ilots centraux, etc.

## Revendications

1. Article, en particulier plaque de cuisson ou élément mobilier, comprenant au moins un substrat en vitrocéramique, ledit substrat étant revêtu en au moins une zone d'une peinture comprenant au moins :
- 1) une résine silicone à groupes méthyle(s) et phényle(s),
- 2) une ou des charges minérales lamellaires d'épaisseur inférieure à 2 µm et de dimensions latérales comprises, pour au moins 80% en poids desdites charges, entre 10 µm et 65 µm, incluant au moins : 2a) du ou des micas, et 2b) du talc et/ou un ou des carbonates,
- 3) un ou des pigments noirs,
dans des teneurs en poids, par rapport au poids de la peinture telle que déposée sur le substrat, respectivement
- 1) comprise entre 20 et 50 %,
- 2) de 5 à 20 %, et
- 3) entre 10 et 30 %.

2. Article vitrocéramique selon la revendication 1, **caractérisé en ce que** la ou les résines silicones de ladite peinture sont dénuées de l'une ou plusieurs des fonctions suivantes: halogène, époxy, polyester, alcényle, vinyle, allyle, alcynyle, mercapto ou thiol ou acrylique et sont en particulier une ou des résines polyphénylméthylsiloxanes, et/ou une ou des résines polydiphényldiméthylsiloxanes.

3. Article vitrocéramique selon l'une des revendications 1 à 2, **caractérisé en ce que** ladite peinture comprend, comme résines silicones, au moins 75% en poids, par rapport au poids total de résines silicones présentes, de résine(s) silicone(s) de type méthyle/phényle, en particulier au moins 80%, et avantageusement 100% de résine(s) silicone(s) de type méthyle/phényle par rapport au poids total de résines silicones présentes, et **en ce que** ladite peinture est dénuée de résines silicones de type alkyde et/ou de type époxy et/ou de type polyester, et/ou de type méthyle.

4. Article vitrocéramique selon l'une des revendications 1 à 3, **caractérisé en ce que** le taux de résine(s) silicone(s) est compris entre 28 et 40 % en poids de ladite peinture telle que déposée sur le substrat.

5. Article vitrocéramique selon l'une des revendications 1 à 4, **caractérisé en ce que** le taux desdites charges lamellaires est de 8 à 20% en poids, ou encore de 1 à 10% en volume, par rapport à ladite peinture telle que déposée sur le substrat, le taux de talc/carbonate(s) étant préférentiellement compris entre 5 et 15%, et le taux de mica(s) étant préférentiellement compris entre 3 et 12% en poids de la peinture.

6. Article vitrocéramique selon l'une des revendications 1 à 5, **caractérisé en ce que** le taux de pigment(s) est compris entre 15% et 30% en poids de la peinture telle que déposée sur le substrat, en particulier de 20 à 30%, et **en ce qu'**au moins 50%, et de préférence au moins 75%, voire au moins 80% des particules de pigments présentent une taille inférieure à 1 µm.

7. Article vitrocéramique selon l'une des revendications 1 à 6, **caractérisé en ce que** l'épaisseur du revêtement en peinture est comprise entre 20 et 40 µm.

8. Article vitrocéramique selon l'une des revendications 1 à 7, **caractérisé en ce que** le revêtement en peinture présente une luminance L* inférieure à 5.

9. Procédé de fabrication d'un article en vitrocéramique selon l'une des revendications 1 à 8, selon lequel on revêt un substrat vitrocéramique en au moins une zone d'une peinture comprenant au moins :
- 1) une résine silicone à groupes méthyle(s) et phényle(s),
- 2) une ou des charges minérales lamellaires d'épaisseur inférieure à 2 µm et de dimensions latérales comprises, pour au moins 80% en poids desdites charges, entre 10 µm et 65 µm, incluant au moins : 2a) du ou des micas, et 2b) du talc et/ou un ou des carbonates,
- 3) un ou des pigment(s) noir(s).

10. Procédé de fabrication d'un article en vitrocéramique selon la revendication 9, **caractérisé en ce que** la peinture est appliquée par sérigraphie sur le substrat en vitrocéramique, la toile de sérigraphie utilisée étant préférentiellement choisie de façon à présenter un nombre de fils par cm compris entre 32 et 43 fils par cm, et est cuite à des températures entre 350 et 480°C pendant de 40 à 60 min.

## Patentansprüche

1. Gegenstand, insbesondere eine Kochplatte oder ein Möbelelement, umfassend mindestens ein Glaskeramiksubstrat, wobei das Substrat in mindestens einem Bereich mit einem Lack beschichtet ist, umfassend mindestens:
- 1) ein Silikonharz mit Gruppen von Methyl(en) und Phenyl(en),
- 2) einen oder mehrere Lamellenmineralfüllstoffe mit einer Dicke von weniger als 2 µm und Seitenabmessungen, die für mindestens 80 % bezogen auf das Gewicht der Füllstoffe zwischen 10 µm und 65 µm enthalten sind, einschließlich mindestens: 2a) des oder mehrerer Glimmer, und 2b) des Talks und/oder eines oder mehrerer Carbonate,
- 3) ein oder mehrere schwarze Pigmente,
in Gewichtsgehalten, bezogen auf des Gewicht des Lacks, wie er auf das Substrat abgelagert ist, jeweils
- 1) zwischen 20 und 50 %,
- 2) von 5 bis 20 %, und
- 3) zwischen 10 und 30 %.

2. Glaskeramikgegenstand nach Anspruch 1, **dadurch gekennzeichnet, dass** das oder die Silikonharze des Lacks frei von der einen oder mehreren der folgenden Gruppen sind: Halogen, Epoxid, Polyester, Alkenyl, Vinyl, Allyl, Alkinyl, Mercapto oder Thiol oder Acryl, und insbesondere ein oder mehrere Polyphenylmethylsiloxanharze und/oder ein oder mehrere Polydiphenyldimethylsiloxanharze sind.

3. Glaskeramikgegenstand nach einem der Ansprüche 1 bis 2,
**dadurch gekennzeichnet, dass** der Lack umfasst, als Silikonharze, zu mindestens 75 Gew.-%, bezogen auf das Gesamtgewicht der vorliegenden Silikonharze, Harz(e) von Silikon(en) der Art Methyl/Phenyl, insbesondere zu mindestens 80 % und vorteilhafterweise zu 100 % Harz(e) von Silikon(en) der Art Methyl/Phenyl bezogen auf das Gesamtgewicht der vorliegenden Silikonharze, und **dass** der Lack frei von Silikonharzen der Art Alkyd und/oder der Art Epoxid und/oder der Art Polyester und/oder der Art Methyl ist.

4. Glaskeramikgegenstand nach einem der Ansprüche 1 bis 3,
**dadurch gekennzeichnet, dass** der Anteil an Harz(en) von Silikon(en) zwischen 28 und 40 % bezogen auf das Gewicht des Lacks beträgt, wie er auf das Substrat abgelagert ist.

5. Glaskeramikgegenstand nach einem der Ansprüche 1 bis 4,
**dadurch gekennzeichnet, dass** der Anteil an Lamellenfüllstoffen 8 bis 20 Gew.-% oder auch 1 bis 10 Vol.-% beträgt, bezogen auf den Lack, wie er auf das Substrat abgelagert ist, wobei der Anteil an Talk/Carbonat(en) vorzugsweise zwischen 5 und 15 % beträgt und der Anteil an Glimmer(n) vorzugsweise zwischen 3 und 12 Gew.-% des Lacks beträgt.

6. Glaskeramikgegenstand nach einem der Ansprüche 1 bis 5,
**dadurch gekennzeichnet, dass** der Anteil an Pigment(en) zwischen 15 Gew.-% und 30 Gew.-% des Lacks beträgt, wie er auf das Substrat abgelagert ist, insbesondere von 20 bis 30 %, und **dass** mindestens 50 % und vorzugsweise mindestens 75 % oder sogar 80 % der Pigmentteilchen eine Größe von weniger als 1 µm aufweisen.

7. Glaskeramikgegenstand nach einem der Ansprüche 1 bis 6,
**dadurch gekennzeichnet, dass** die Dicke der Beschichtung aus Lack zwischen 20 und 40 µm beträgt.

8. Glaskeramikgegenstand nach einem der Ansprüche 1 bis 7,
**dadurch gekennzeichnet, dass** die Beschichtung aus Lack eine Leuchtdichte L* von weniger als 5 aufweist.

9. Verfahren zum Herstellen eines Glaskeramikgegenstands nach einem der Ansprüche 1 bis 8, wobei ein Glaskeramiksubstrat in mindestens einem Bereich mit einem Lack beschichtet wird, umfassend mindestens:
- 1) ein Silikonharz mit Gruppen von Methyl(en) und Phenyl(en),
- 2) einen oder mehrere Lamellenmineralfüllstoffe mit einer Dicke von weniger als 2 µm und Seitenabmessungen, die für mindestens 80 % bezogen auf das Gewicht der Füllstoffe zwischen 10 µm und 65 µm enthalten sind, einschließlich mindestens: 2a) des oder mehrerer Glimmer, und 2b) des Talks und/oder eines oder mehrerer Carbonate,
- 3) ein oder mehrere schwarze Pigmente.

10. Verfahren zum Herstellen eines Glaskeramikgegenstands nach Anspruch 9, **dadurch gekennzeichnet, dass** der Lack durch Siebdruck auf das Glaskeramiksubstrat aufgetragen wird, wobei das verwendete Siebdruckgewebe vorzugsweise ausgewählt ist, um eine Anzahl von Fäden pro cm zwischen 32 und 43 Fäden pro cm aufzuweisen, und bei Temperaturen zwischen 350 und 480 °C 40 bis 60 min lang gebrannt wird.

## Claims

1. An article, especially a cooktop or furniture element, comprising at least one substrate made of glass-ceramic, said substrate being coated in at least one zone with a paint comprising at least:
- 1) a silicone resin comprising methyl and phenyl groups,
- 2) one or more lamellar inorganic fillers with a thickness of less than 2 µm and with lateral dimensions, for at least 80% by weight of said fillers, of between 10 µm and 65 µm, including at least: 2a) mica(s), and 2b) talc and/or one or more carbonates,
- 3) one or more black pigments,
in weight content, with respect to the total weight of the paint as deposited on the substrate, respectively
- 1) comprised between 20 and 50 %,
- 2) from 5 to 20 %, and
- 3) between 10 and 30 %.

2. The glass-ceramic article as claimed in claim 1, **characterized in that** the silicone resin(s) of said paint are devoid of one or more of the following functional groups: halogen, epoxy, polyester, alkenyl, vinyl, allyl, alkynyl, mercapto or thiol or acrylic, and are especially one or more polyphenylmethylsiloxane resins and/or one or more polydiphenyldimethylsiloxane resins.

3. The glass-ceramic article as claimed in either of claims 1 and 2, **characterized in that** said paint comprises, as silicone resins, at least 75% by weight, with respect to the total weight of silicone resins, of silicone resin(s) of methyl/phenyl type, especially at least 80% and advantageously 100% of silicone resin(s) of methyl/phenyl type, with respect to the total weight of silicone resins present, and **in that** said paint is devoid of silicone resins of alkyd type and/or of epoxy type and/or of polyester type and/or of methyl type.

4. The glass-ceramic article as claimed in one of claims 1 to 3, **characterized in that** the content of silicone resin(s) is between 28% and 40% by weight of said paint as deposited on the substrate.

5. The glass-ceramic article as claimed in one of claims 1 to 4, **characterized in that** the content of said lamellar fillers is from 8% to 20% by weight, or also from 1% to 10% by volume, with respect to said paint as deposited on the substrate, the content of talc/carbonate(s) preferentially being of between 5% and 15% and the content of mica(s) preferentially being of between 3% and 12% by weight of the paint.

6. The glass-ceramic article as claimed in one of claims 1 to 5, **characterized in that** the content of pigment(s) is of between 15% and 30% by weight of the paint as deposited on the substrate, in particular from 20 to 30%, and **in that** at least 50% and preferably at least 75%, indeed even at least 80%, of the particles of pigments exhibit a size of less than 1 µm.

7. The glass-ceramic article as claimed in one of claims 1 to 6, **characterized in that** the thickness of the paint coating is between 20 and 40 µm.

8. The glass-ceramic article as claimed in one of claims 1 to 7, **characterized in that** the paint coating exhibits a lightness L* of less than 5.

9. A process for the manufacture of a glass-ceramic article as claimed in one of claims 1 to 8, according to which a glass-ceramic substrate is coated in at least one zone with a paint comprising at least:
- 1) a silicone resin comprising methyl and phenyl groups,
- 2) one or more lamellar inorganic fillers with a thickness of less than 2 µm and with lateral dimensions, for at least 80% by weight of said fillers, of between 10 µm and 65 µm, including at least: 2a) mica(s), and 2b) talc and/or one or more carbonates,
- 3) one or more black pigment(s).

10. The process for the manufacture of a glass-ceramic article as claimed in claim 9, **characterized in that** the paint is applied by screen printing to the glass-ceramic substrate, the screen-printing screen used preferentially being chosen so as to exhibit a number of yarns per cm of between 32 and 43 yarns per cm, and is fired at temperatures between 350 and 480°C for from 40 to 60 min.
